# DEMANDE DE BREVET EUROPEEN

(11) **EP 0 545 274 A1**
(43) Date de publication de la demande: **09.06.1993**
(21) Numéro de dépôt: 92120155.4
(22) Date de dépôt: 26.11.1992
(51) Int. Cl.: G01K 3/04, G01K 11/06

(54) **Indicateur de conservation pour produits congéles ou refrigerés et procédé de mise en oeuvre de cet indicateur**

(30) Priorité: 03.12.1991 FR 9115058
(71) Demandeur: SOCIETE COOL S.a.r.l., F-07800 La Voulte sur Rhône (FR)
(72) Inventeur: Toporenko, Yves, F-75011 Paris (FR); Berrebi, Georges, F-26500 Bourg les Valences (FR)
(74) Mandataire: Andreeff, François

(57) **Abrégé**

L'invention concerne un indicateur de conservation pour produits congelés ou réfrigérés et le procédé de mise en oeuvre de cet indicateur.

L'indicateur est constitué d'un sachet en matière plastique (1) transparente, de faibles dimensions extérieures, dont la partie interne est constituée de deux cavités (3) et (4) hermétiques vis-à-vis de l'extérieur fermées séparément, par exemple, par soudure ou clipsage (2). La séparation interne (5) commune aux deux cavités est réalisée par soudure après que l'on ait au préalable disposé un ou plusieurs capillaires (6) mettant en communication les deux cavités.

L'une des cavités est remplie de liquide eutectique, l'autre cavité est garnie de papier buvard ou de matière hydrophile. Le sachet est disposé par fixation dans ou sur l'emballage à surveiller, de manière que la cavité (4) qui contient le papier buvard ou la matière hydrophile soit considérée comme surface d'observation.

## Description

La présente invention concerne un dispositif qui permet de reconnaître par un simple examen visuel si un produit froid et surtout surgelé est propre ou non à la consommation.

Les surgelés sont des produits sûrs fabriqués avec une extrême rigueur présentant des intérêts incontestables sur le plan microbiologique (au-dessous de - 18 °C, les microbes ne se développent plus), toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne du froid, car on n'est pas sans ignorer qu'entre le moment où le produit est surgelé et le moment où il est consommé la chaîne du froid peut être rompue en de nombreuses occasions.

En effet, à - 18 °C, on stoppe la multiplication des microbes, des levures, et des moisissures. Plus tard à la décongélation, les microorganismes reprennent une vie intense. Entre le transport des marchandises, des livraisons, la vente et les manipulations de la ménagère, la moindre négligence peut être fatale. De récentes enquêtes au niveau des commerces et des restaurants ont prouvé que la chaîne du froid est rompue dans 30 % des cas (porte d'une armoire réfrigérée mal fermée pendant tout un week-end ou interruption d'électricité, etc.) En dehors de l'examen des boîtes ou des paquets proposés sur le marché des consommateurs, cet examen n'étant d'ailleurs pas fiable, on ne trouve guère que le brevet français relatif aux produits surgelés FR-A-2626072 de Monsieur TOPORENKO proposant un moyen simple et rapide de contrôle de la chaîne du froid, qui consiste à utiliser un petit glaçon de forme géométrique, coloré dans sa masse, fluorescent de surcroît, moulé sur un support, ou maintenu entre des index, le tout étant intégré à l'intérieur d'une minuscule boîte hermétique transparente qui accompagne l'emballage du produit surgelé d'une façon inviolable.

La présente invention concerne de nouvelles réalisations pratiques perfectionnées de l'art antérieur en utilisant un mélange liquide apte à contrôler des températures de l'ordre de - 90 °C à + 30 °C. Le dispositif selon l'invention prend en compte non seulement la variation de température, mais également sa durée. Il peut être utilisé pour le froid négatif et le froid positif. Ce dispositif simple et peu coûteux, a l'avantage d'avoir un fonctionnement fiable et irréversible.

La présente invention concerne notamment un dispositif destiné à être adjoint par fixation (collage ou agrafage) à l'intérieur ou à l'extérieur de l'emballage de protection d'un produit réfrigéré à caractère alimentaire industriel, médical ou pharmaceutique.

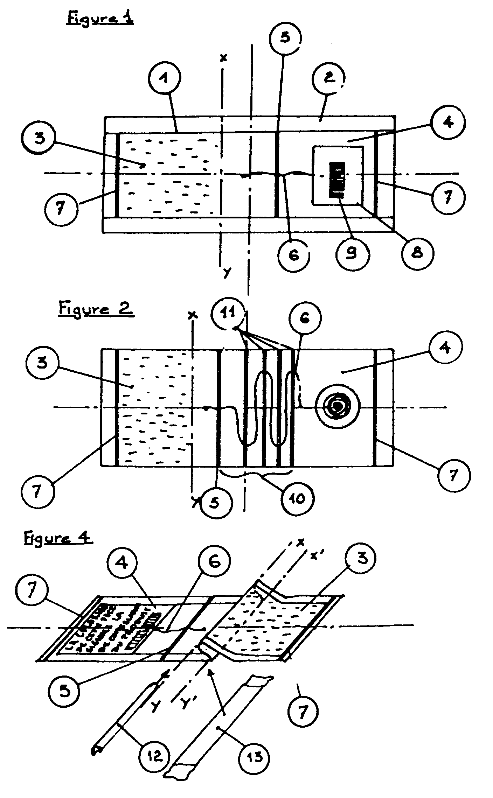

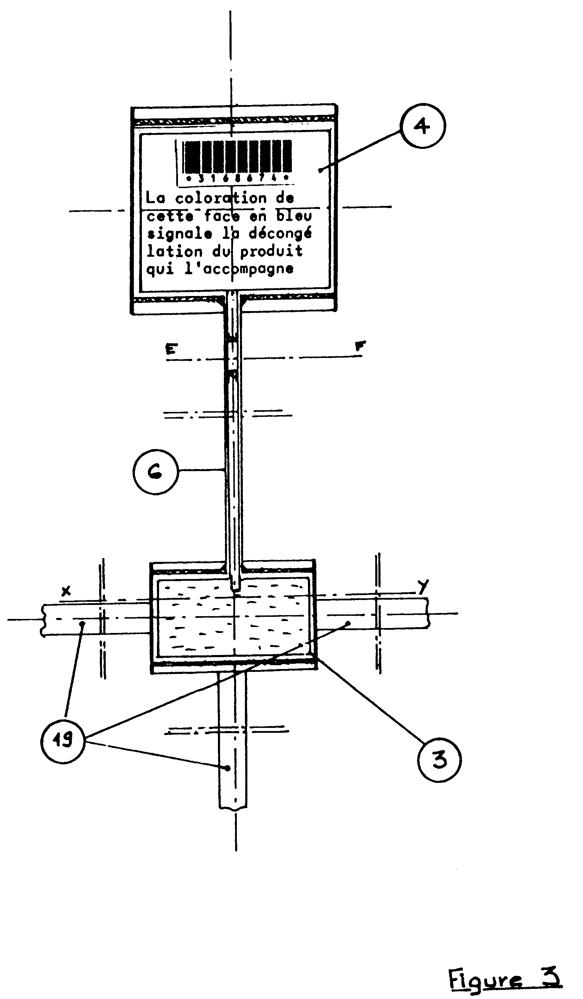

Dans la figure 1, l'indicateur est constitué d'un sachet parallélépipèdique (1) en matière plastique transparente de faibles dimensions extérieures, s' inscrivant au milieu d'une surface d'amarrage adhésive (2). La partie interne du sachet est constituée par deux cavités hermétiques extérieurement (3) et (4) dont les orifices de remplissage sont séparés, les fermetures (7) étant obtenues par soudure ou par clip. La cloison interne (5) commune aux deux cavités (3) et (4) est réalisée par soudure après que l'on ait au préalable disposé perpendiculairement par rapport à ligne de soudure, un ou plusieurs capillaires (6), de manière a assurer une communication entre les deux cavités. Les capillaires (6) peuvent être constitués par un ou plusieurs fils de matière végétale (coton, paille, fibre, etc.) ou synthétiques ayant les propriétés des précédentes, ou par une ou plusieurs bandes très fines de papier buvard ou matériau équivalent, ou par une ou plusieurs pistes adhésives revêtues de poudre absorbante ou adsorbante (sucre, ponce, etc.), ou par des pistes imprimées dans le film plastique qui sert à réaliser les sachets, ou par un ou plusieurs tubes souples du type capillaire en matière plastique, ou éventuellement en verre.

Le remplissage de la cavité (3) du sachet, (ou réservoir du dispositif) se fait au moyen d'un liquide eutectique de préférence, ou d'une solution alcoolique adaptée, après que l'on ait effectué un pliage XY de la cavité (3) suivant une ligne parallèle à la cloison (5), cette disposition de construction évite de mettre le liquide en contact avec les capillaires, et facilite la fabrication et le stockage des dispositifs.

Les liquides utilisés peuvent être luminescents, fluorescents, phosphorescents, dont les caractéristiques physiques, point de congélation et de décongélation, point de goutte, prédéterminent l'image thermique ou frigorifique du produit réfrigéré auquel ils sont adjoints.

La mise en service du dispositif se fait après congélation de l'ensemble du produit, le sachet est déplié au niveau du réservoir et le dispositif est à considérer en état de veille. Le liquide eutectique ou autre, qui se trouve dans le réservoir ou cavité (3) est solidifié et le reste, tant que la température de conservation imposée est respectée, si celle-ci ne l'est pas la masse solidifiée du réservoir se liquéfie et migre par le ou les capillaires jusqu'à la cavité (4) qui est garnie d'une matière absorbante ou adsorbante, ou d'un tampon (8) circulaire réalisé au moyen d'un ou plusieurs capillaires (papier buvard, coton hydrophile, ponce, etc.) qui se colore, ou fait apparaître une mention (telle que "attention produit décongelé"), et de plus peut masquer le code de lecture (9) affecté au produit, si celui-ci est alimentaire. La cavité (4) est la cavité d'observation qui renseigne sur l'état du produit. Le fonctionnement du dispositif se réalise dans toutes les positions, de plus il est irréversible.

La figure 2 représente un dispositif équipé d'un temporisateur qui s'interpose entre les deux cavités (3) et (4) du système précédent représenté par la figure 1. Le temporisateur est à utiliser dans le cas où l'on souhaite désensibiliser le détecteur, et prendre en compte les différents coefficients de transmission thermiques qui affectent certains emballages et la nature des produits emballés. Lors de la fabrication du dispositif il est réalisé une cavité (10) hermétique extérieurement, qui se trouve disposée entre les cavités (3) et (4) et dans laquelle, on impose aux capillaires (6) un parcours sinueux, où chaque changement de sens est marqué par la réalisation d'une cloison soudée (11), retardant la migration du liquide dans la liaison ainsi établie entre les cavités (3) et (4).

La figure (3) représente un dispositif constitué par deux sachets en matière plastique transparente en tout ou partie et par symbolisation avec les dispositifs des figures précédentes 1 et 2, le sachet contenant la matière absorbante (coton hydrophile, papier buvard, spirale de capillaire, etc.) et qui sert de surface d'observation est repéré (4), l'autre sachet contenant le liquide générateur du système est repéré (3). Les deux sachets ou cavités sont reliés par un tube (6) en matière plastique souple, qui peut lui-même être un capillaire, ou un tube ou gaine qui protège un ou plusieurs capillaires dont les extrémités aboutissent dans les cavités (3) et (4) afin de permettre au liquide provenant de la cavité (3) dans-une phase de décongélation de migrer vers la cavité (4) et en colorer les absorbants ou adsorbants.

Pour résoudre les problèmes de la fabrication, du stockage, de la mise en service, le réservoir peut être obturé par pliage suivant un axe XY, comme dans les précédents dispositifs décrits, afin d'éviter la mise en contact du liquide avec les capillaires, ou adopter l'intervention sur le tube souple en matière plastique (6) en lui faisant subir une pliure suivant un axe E/F, à la condition qu'il soit lui même un capillaire, sinon il faut assurer une discontinuité à cet endroit sur le ou les capillaires.

Cette forme de réalisation peut s'imposer lorsque le produit à surveiller représente une masse importante distante des parois de l'emballage, ce qui nécessite un dispositif assez long par rapport au dispositif de fabrication courante. La cavité (3) qui contient le liquide et constitue le réservoir du dispositif, peut être pourvue d'éléments constitués par des bandes (19) en matière plastique métallisée, munies de surfaces adhésives permettant de les fixer au produit à surveiller de façon à constituer des sondes ou des ponts thermiques qui sensibilisent le dispositif.

Les ensembles souples sont munies de bandes ou surfaces adhésives qui permettent de les fixer aux produits ou emballages à surveiller.

La figure 4 représente un détecteur analogue à ceux décrits précédemment, le pliage de la paroi de la cavité réservoir (3) selon un axe XY permet d'éviter que le liquide générateur du système entre en contact avec le ou les capillaires du dispositif lors du remplissage du réservoir à la fabrication du détecteur, en cours de stockage, ou avant que le liquide ne soit congelé. Pour bénéficier des effets de cette fermeture et la conserver jusqu'à la mise en service du détecteur, le pliage étant effectué, on maintient la pliure à l'aide d'une barrette du type clip (12), à la barrette peut se substituer une bande adhésive (13) qui assure et maintient une double fermeture XY et X'Y'' de la cavité (3).

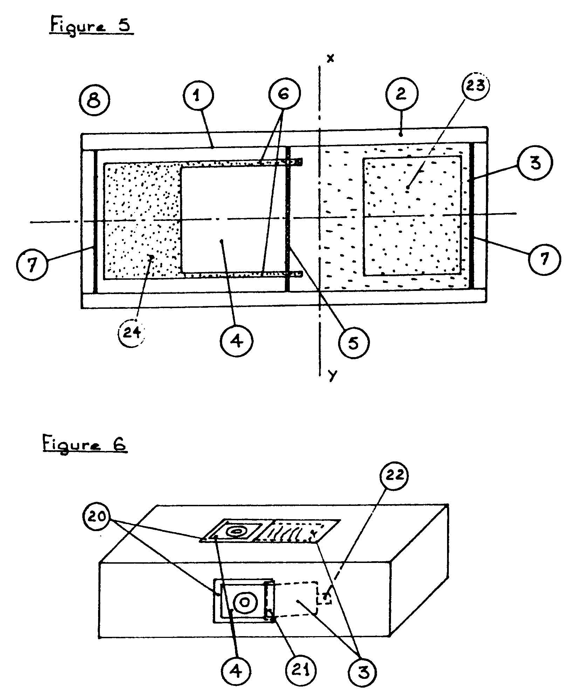

La figure 5 représente un détecteur analogue aux précédents dans sa conformation des cavités, toutefois la cavité (3) est garnie d'une feuille absorbante (papier buvard, éponge, etc.) saturée de liquide (23). La cavité (4) est garnie d'une feuille absorbante de même nature mais déshydratée, munie de canaux de transfert se substituant aux capillaires (6).

La figure 6 représente la façon de disposer un détecteur sur un emballage. Dans un premier cas, le détecteur est disposé à la manière d'une étiquette, et se trouve maintenu et encadré d'une bande adhésive (20), la cavité (4) d'observation est rendue visible par la fenêtre pratiquée dans la surface adhésive lors de la fabrication du détecteur. Dans le deuxième cas, l'emballage est pourvu d'une ouverture en forme de fente (21), légèrement plus grande que la section transversale du détecteur retenu pour ce type d'emballage. Par l'ouverture pratiquée, on y glisse la cavité réservoir (3) du détecteur, que l'on peut maintenir à l'intérieur de l'emballage par une petite bande adhésive (22). La fenêtre d'observation (4) du détecteur est maintenue, et encadrée par une bande adhésive (20). Toutes les dispositions énumérées ci-dessus peuvent être prises lors de la conception ou la préparation des emballages avant le remplissage de produit ou matière à congeler ou réfrigérer.

## Revendications

1. Dispositif de mise en oeuvre d'un indicateur d'état de conservation pour produit congelé ou réfrigéré de type industriel, médical ou alimentaire, caractérisé par l'utilisation d'une enveloppe en matière plastique souple, ou en matériau équivalent, ou en verre, à l'intérieur de laquelle on a constitué une ou plusieurs cavités ayant la particularité de posséder une cloison commune pour chacune d'entre elles, dans laquelle, se trouvent ménagés un ou plusieurs orifices de communication, constitués par l'inclusion d'un ou plusieurs capillaires (fil, de type végétal, ou synthétique, piste capillaire, tube capillaire, etc...) lors de la réalisation des cloisons, et caractérisé par l'utilisation d'un liquide coloré du type eutectique, ou d'une solution alcoolique plus, ou moins diluée, de tout liquide non toxique, fluorescent, phosphorescent, faiblement basique ou acide, susceptible de migrer dans un capillaire, afin de sensibiliser et colorer une matière absorbante ou adsorbante, ou un marqueur colorimétrique, disposé dans une cavité du dispositif réservée à cet effet et servant de surface d'observation, pour constater le ou le non fonctionnement du dispositif lors d'une décongélation, le dispositif étant caractérisé en outre par l'utilisation de fermeture par clip, soudure, bouchon, nécessaires à l'obtention de cloisons étanches extérieurement.

2. Dispositif de détection s'intégrant dans le dispositif selon la revendication 1 et caractérisé par la réalisation d'une cavité provisoire, ou cavité de mise en charge du liquide au sein du réservoir réservé à cet effet, permettant d'isoler les capillaires du liquide lors de sa conception, disposition facilitant le stockage et la mise en service à l'emballage des produits notamment.

3. Dispositif de détection selon la revendication 2 caractérisé par la réalisation d'une cavité provisoire, obtenue par pincement extérieur de la paroi du réservoir de liquide selon un plan de pliage transversal, à l'axe longitudinal de symétrie du dispositif, maintenu au moyen d'un clip ou d'une pince amovible lors de la mise en service du détecteur, un rabattement à 180 °C de l'enveloppe extérieure suivant un axe perpendiculaire à l'axe longitudinal du dispositif (et passant par le réservoir) assurant une double fermeture de la cavité de mise en charge du réservoir, cette fermeture étant maintenue par un adhésif double face disposé de part et d'autre du plan de pliage, jusqu'à la mise en service du détecteur.

4. Dispositif selon l'une des revendications 1 à 3 caractérisé par l'utilisation d'un interrupteur d'écoulement de liquide sur le circuit des capillaires, afin d'éviter lors de la fabrication du dispositif et notamment lors du remplissage du réservoir de liquide, d'engendrer une migration de liquide vers la cavité d'observation, si celui-ci n'est pas congelé. L'interrupteur d'écoulement s'obtient par pliage et pinçage du type capillaire ou de l'enveloppe qui contient le ou les capillaires à un endroit prédéterminé à la construction par la réalisation d'une discontinuité au sein de ceux-ci.

5. Dispositif selon l'une des revendications 1 à 4 caractérisé par l'utilisation d'un temporisateur, ou retardateur de fonctionnement, disposé entre la cavité réservée au marqueur et la partie de la cavité située en aval de l'interrupteur d'écoulement du liquide. Il est constitué d'un parcours sinueux des capillaires où chaque changement de sens est marqué par la réalisation d'une cloison soudée, retardant la migration du liquide dans la liaison entre la cavité réservoir et la cavité d'observation garnie d'absorbeur.

6. Dispositif selon l'une des revendications 1 à 5 caractérisé par l'utilisation de radiateurs ou sondes constitués de rubans adhésifs pourvus d'une pellicule plastique aluminisée fixés sur le réservoir ou cavité contenant le liquide, et raccordés en différents points de la masse ou volume à surveiller.

7. Dispositif selon l'une des revendications 1 à 5 caractérisé par l'utilisation d'une piste, d'une empreinte d'un circuit imprimé, garnie ou réalisé au moyen d'un produit naturel ou synthétique pouvant se substituer aux produits capillaires jusqu'ici employés.

8. Dispositif selon l'une des revendications 1 à 7 caractérisé lors de sa fixation sur le produit ou l'emballage à surveiller, par l'ouverture du compartiment de mise en charge du réservoir de liquide, et ce au cours du collage du dispositif par enlèvement de la pellicule de protection attenant à l'adhésif.

9. Dispositif selon l'une des revendications 1 à 8 caractérisé par l'utilisation d'un fil comme marqueur, sa coloration par le liquide indiquant une décongélation, l'excédent de liquide drainé par le fil provoquant le masquage du code de lecture dans le cas d'un produit alimentaire.

10. Dispositif selon l'une des revendications 1 à 9 caractérisé par l'utilisation d'un marqueur au logo du fabricant de produit dans le cas d'un produit alimentaire.
